# EUROPEAN PATENT APPLICATION

(11) **EP 1 555 061 A2**
(43) Date of publication of application: **20.07.2005**
(21) Application number: 05250090.7
(22) Date of filing: 11.01.2005
(51) Int. Cl.: B01D 53/86

(54) **Method and apparatus for disposal of hydrogen from fluorine generation**

(30) Priority: 16.01.2004 US 759973
(71) Applicant: THE BOC GROUP, INC., Murray Hill, New Providence, New Jersey 07974-2082 (US)
(72) Inventor: Hogle, Richard Allen, Oceanside CA 92056 (US); Satchell, Donald Prentice, Chatham NJ 07928 (US); Clough, Robin, Hambleton Lancashire FY6 9BP (GB); Dawson, Robert, Fleetwood Lancashire FY7 8AB (GB); Gawlowski, David, Bend OR 97702 (US)
(74) Representative: Booth, Andrew Steven

(57) **Abstract**

Apparatus and methods useful for disposal of hydrogen generated from a fluorine generation cell are described. In one embodiment the apparatus comprises an aerosol reduction unit and a catalytic combustion unit. The catalyst in the catalytic combustion unit is maintained at a temperature such that a pilot light or electrical spark apparatus may be eliminated. Fluorine generation apparatus and methods including an aerosol reduction unit and catalytic unit are also described.

## Description

The invention is generally related to the field of fluorine generation. More specifically, the invention relates to apparatus and methods for disposal of hydrogen generated from fluorine generators.

Fluorine is the most reactive of all of the elements, the most powerful oxidizing agent, and the most electronegative. The manufacture of silicon chips relies on the wet and dry etch processes utilizing materials such as ultra-high-purity HF and NF₃.

To generate fluorine (F₂) electrolytically from hydrogen fluoride (HF), hydrogen (H₂) is a necessary by-product. US 4,511,440 discusses the manufacture of fluorine by electrolysis of mixtures of fluorides, the fluorine being derived, for example, from mixtures of an alkali metal fluoride and hydrogen fluorides. Systems of this kind are disclosed for example in US 3,773,644, US 4,139,447 and GB 852,369. Hydrogen is evolved at the cathode and fluorine, with perhaps varying amounts of oxygen and other impurities, at the anode. As mixtures of hydrogen and fluorine give rise to violent explosions, such fluorine cells customarily have a diaphragm or partition, also referred to as a "skirt", designed to prevent mixing of the gases evolved at the two electrodes.

Due to its combustible and explosive nature, controlled combustion of hydrogen for disposal is preferred. In this case, however, the hydrogen stream invariably contains some HF and some electrolyte aerosol, which makes the combustion of hydrogen much more difficult. In addition, due to the requirement to start and stop the fluorine generator, the system must be able to complete the combustion of hydrogen without an active ignition source. Typically, fluorine generators simply vent hydrogen into an air stream, usually below the lower explosion limit (LEL) of 4 percent in air. However, hydrogen is known to pool or accumulate in high areas because it is a very light gas, and can cause downstream problems that are unexpected. In light of these problems, it has been necessary to maintain a pilot light of natural gas, or provide electricity to maintain an ignition source.

US 5,378,324 discloses a process and an electrolytic cell for the production of fluorine. Aside from other problems, the patent mentions maintenance problems with present designs caused, to some extent, by the highly corrosive nature of fluorine, and the effect of "misting" in which an aerosol of the electrolyte becomes entrained in the fluorine gas and is deposited on the walls of pipework outside the cell, thus leading to restrictions and eventually to blockages in the pipework. One stream emerges adjacent to the anode and has fluorine entrained therein, the other stream emerges adjacent to the cathode and has hydrogen entrained therein. The fluorine and the hydrogen are subsequently separated from their respective streams of electrolyte. The patent states that fluorine and hydrogen entrained in the electrolyte may each comprise about 10 v/o, and when liberated may contain some HF, possibly between 15-20 v/o, and this HF can be removed to a considerable extent (e.g. to less than 2 v/o) by known cryogenic techniques.

Other patents discussing fluorine and hydrogen production include U.S. Patent Nos. 4,176,018; 4,139,447; 4,125,443; 2,879,212; 3,642,603; 3,707,457; 4,284,617; 5,207,999; 6,210,549; FR 2 082 366, FR 2 145 063, RU 2198962; US2003/098038, US 2003/121796, and WO03/056066. In addition, platinum has been used to combust hydrogen generated from nitric acid generation plants, but to our knowledge has never been suggested for use in applications where HF or electrolyte is present.

Despite improvements in the art, the need remains for apparatus and methods to efficiently and safely dispose of hydrogen generated from fluorine generators, especially in the presence of HF and aerosol electrolyte, and especially when an active ignition source is not available or not employed.

A first aspect of the present invention provides apparatus useful for disposal of hydrogen in a fluid comprising hydrogen, and residual amounts of HF and aerosol electrolyte, as would emanate from a fluorine generator, the apparatus comprising an electrolyte aerosol removal component comprising an aerosol removal composition, preferably a bed of soda lime, sodium fluoride, heated activated aluminium oxide, finely divided nickel, or combination thereof, which the fluid is adapted to contact; and a catalytically activated combustion surface positioned inside of a forced convection duct, the forced convection duct fluidly connected to the aerosol removal component by a conduit, the catalytically activated combustion surface adapted to combust the hydrogen in an oxygen-containing stream, typically air or exhaust gases comprising air, flowing through the forced convection duct.

Apparatus of the invention are preferably modular, and more preferably portable, so that the apparatus may be installed in one location and then transferred to another location, either in the same plant, or different plant. Other preferred apparatus are those wherein the electrolyte aerosol removal component and catalytic unit are mounted, preferably removably mounted, on top of a fluorine generation unit.

Other preferred apparatus of the invention are those wherein the aerosol removal component is in bed form, that is, as a bed of granular material, and preferably maintained at a temperature ranging from about 0°C to about 200°C, while the catalytic unit is maintained at a temperature of at least 70°C, preferably at least about 200°C, for reasons explained herein.

Yet other preferred apparatus of the invention are those wherein the catalytically activated combustion surface comprises one or more layers of wire screen, wherein individual wires of the wire screen may be the same or different in composition, diameter, and orientation.

A second aspect of the invention is a method for disposal of hydrogen in a fluid comprising hydrogen and residual amounts of HF and aerosol electrolyte from a fluorine generator, the method comprising the steps of flowing the fluid through an electrolyte aerosol removal component comprising an aerosol removal composition, the aerosol removal composition preferably comprising a bed of soda lime, sodium fluoride, heated activated aluminium oxide, finely divided nickel, or combination thereof, wherein the fluid contacts the aerosol removal composition thereby forming a fluid reduced in aerosol, and contacting the fluid reduced in aerosol with a catalytically activated combustion surface positioned inside of a forced convection duct, while a gas comprising oxygen flows through the forced convection duct, thereby combusting the hydrogen with oxygen in the oxygen-containing stream.

Preferably the fluid reduced in aerosol flows through a conduit comprised of nickel metal before entering the catalytically activated combustion surface, which is preferably heated. This is preferably performed by heating the support structure holding the catalytically activated combustion surface in the forced convection duct, thereby ensuring spontaneous ignition of hydrogen under any conditions. The fluid reduced in aerosol may also be heated separately.

The present invention also provides apparatus for generating fluorine, the apparatus comprising a fluorine generator adapted to produce a hydrogen-rich fluid, and apparatus as aforementioned, wherein the aerosol removal unit is fluidly connected to the fluorine generator and adapted to accept the hydrogen-rich fluid.

The present invention further provides a method of generating fluorine, the method comprising the steps of generating a fluorine-rich stream and a hydrogen-rich stream, the hydrogen-rich stream comprising minor amounts of electrolyte and hydrogen fluoride, routing the fluorine-rich stream to a cleanup train to produce a purified fluorine stream, and routing the hydrogen-rich stream to apparatus as aforementioned, thereby substantially reducing the aerosol content and combusting the hydrogen.

Further aspects and advantages of the invention will become apparent by reviewing the description of preferred embodiments that follows.

The term "catalytically activated", as that term is used herein when referring to a composition or surface, means functioning to initiate and/or accelerate a chemical reaction, without the composition or surface being itself consumed in the reaction.

The term "catalytically activated combustion surface" means a catalytically activated surface that initiates and promotes combustion of hydrogen upon the surface coming into contact with hydrogen and oxygen.

The term "bed" as used herein refers to a mass of solid, preferably granular materials having channels that allow passage of fluids there through.

As used herein the term "modular" means that preferred apparatus of the invention are constructed in standardized units and dimensions for flexibility and variety in use.

Preferred features of the present invention will now be described, by way of example only, with reference to the accompanying drawings, in which:
Figure 1 illustrates a block diagram of a fluorine generation apparatus; and
Figure 2 illustrates schematically one embodiment of an apparatus according to the present invention; and
Figure 3 illustrates schematically another embodiment of an apparatus according to the present invention.

The present invention relates to electrolytic fluorine generation, more specifically, to disposal of the hydrogen generated during electrolytic production of fluorine.

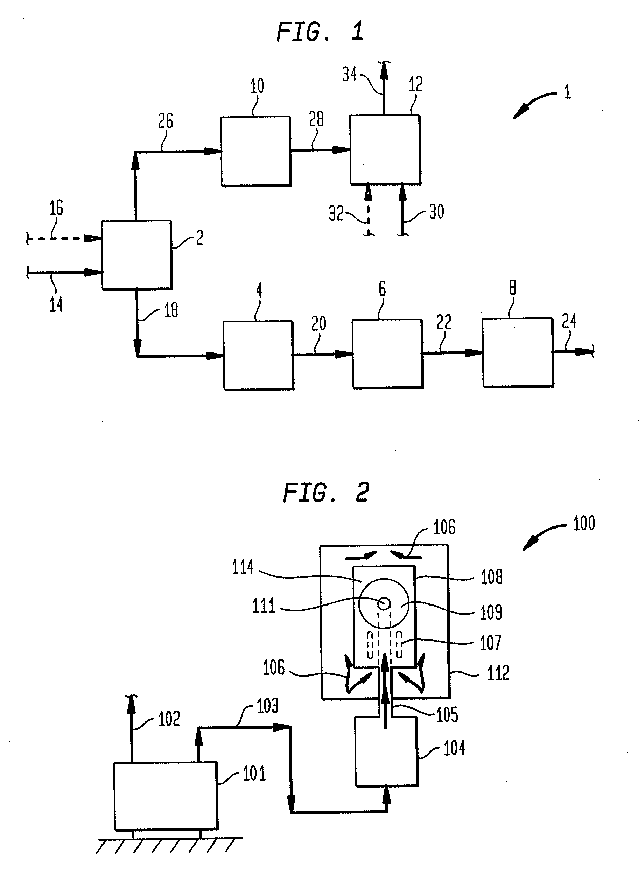

Referring to Figure 1, there is illustrated at 1 schematically in block diagram manner a fluorine generation apparatus and method which might appear in a commercial semiconductor fabrication facility, and which will serve to illustrate the different aspects of the invention. An electrolytic fluorine generator 2 is provided, along with a fluorine clean-up train 4, a customer process 6, and an exhaust gas clean-up system 8. Also illustrated are an aerosol removal unit 10 and a catalytic unit 12. Fluorine generator 2 will have an electrolyte, typically hydrogen fluoride (HF) and electricity as inputs, represented by 14 and 16, respectively, a fluorine-rich stream routed through a conduit 18 to fluorine clean-up train 4, and a hydrogen-rich stream routed through a conduit 26 to aerosol removal unit 10. The electrolyte is typically available in batch mode. Fluorine generators of this nature are well-known in the semiconductor art, and require no further explanation herein. One such fluorine generator is the on-site modular fluorine generation cabinet known under the trade designation "Generation-F 80", available from Fluorogas, a division of The BOC Group, Murray Hill, NJ, which is an on-demand electrolytic fluorine generator having integrated fluorine production, purification, compression and storage in a compact, ventilated enclosure. This system has a rated output of 80 standard litres per hour, and can deliver up to 3.2 kg of high purity fluorine per day to a customer's process tool. The unit operates on an electrical feed of 70 Amps at 208 Volts, has nitrogen and cooling water hook-ups, and exhausts about 13.5 m³/min of exhaust air, containing up to 1.3 slpm of hydrogen and 0.1 slpm of HF.

Conduit 18 routes the fluorine-rich stream to fluorine clean-up train 4, producing a purified fluorine stream which is routed via a conduit 20 to the customer process 6, which is in turn connected to the exhaust gas system 8 via a conduit 22. Conduit 24 routes a cleaned exhaust gas to further processing or to the atmosphere.

Conduit 26 routes the hydrogen-rich stream to the aerosol removal unit 10, the operation of which is further explained herein, creating a reduced aerosol hydrogen-rich stream that is routed via a conduit 28 to catalytic unit 12. As further explained herein, catalytic unit 12 removes substantially all of the hydrogen through a catalytic combustion process, creating a waste gas stream that may be safely exhausted, as indicated by conduit 34. Catalytic unit will have an electrical input as well as an input of a gas comprising oxygen, typically air or a modified air stream (air having impurities therein). The electrical input is necessary to heat the gases and ensure combustion of the hydrogen.

Figure 2 illustrates schematically an embodiment where the aerosol removal and catalytic units are not mounted on the fluorine generator. A fluorine generator 101 has two outlets. A fluorine product line, 102, routes a fluorine-rich stream comprising fluorine and residual HF and is typically routed to one or more purification units before it is routed to the customer's process (not illustrated). At the same time, a hydrogen-rich stream is produced at the same rate and routed through conduit 103. The hydrogen stream is also saturated with HF, along with a very fine electrolyte aerosol that is carried in the hydrogen-rich stream. The percentage of hydrogen in this stream may range over a broad concentration range, from less than 1 percent up to 99.9 percent, but more typically ranges from about 90 to about 98 percent hydrogen, on a volume basis. The hydrogen-rich stream will also comprise a minor amount of HF plus electrolyte, in aerosol form. The electrolyte and HF will typically be present in an amount ranging from about 0.1 percent up to about 5 percent.

Conduit 103 routes the hydrogen-rich stream to an aerosol removal unit 104, having an aerosol removal composition therein. The aerosol removal composition is preferably in granular bed form, and is preferably selected from the group consisting of soda lime, sodium fluoride, heat activated aluminium oxide, finely divided nickel, or combination thereof. Soda lime (CAS:8006-28-8) is a mixture of calcium oxide with sodium hydroxide or potassium hydroxide, and is typically used as an absorbent for carbon dioxide and water vapour. The use of soda lime has the added advantage of removing some of the HF (believed to be through a reaction of some of the HF with some of the calcium oxide to form calcium fluoride), although this is not a strict requirement.

Once the gas passes through the aerosol removal unit 104, a gas having reduced or no aerosol is routed to a catalytically activated combustion surface 109 positioned inside of a forced convection duct 112. Forced convection duct 112 is filled with a flowing oxygen-containing stream, typically air or a flowing gas stream comprising air and other residual waste gases. In many semiconductor production facilities, for example, nitrogen is used as a purge gas, and then vented to the exhaust system. Carbon dioxide, carbon monoxide, perfluorocarbon compounds, and some unreacted chemical precursors may also be present. Duct 112 is fluidly connected to aerosol removal unit 104 by a conduit 105, preferably a nickel or nickel-lined conduit. Catalytically activated combustion surface 109 is adapted to combust hydrogen in the oxygen-containing stream flowing through duct 112.

Aerosol removal unit 104 and catalytically activated combustion surface 109 are fluidly connected through conduit 105. Conduit 105 routes the reduced aerosol stream (now comprising from about 95 to about 99 percent hydrogen, and residual HF) into a head 108, which is a metallic block, preferably a nickel block that has been machined to accept the reduced aerosol fluid, and other components to be described. The reduced aerosol fluid flows through and exits out through a channel 111, preferably drilled perpendicularly through a surface 114 of head 108. Outside of nickel plate 114 is mounted catalytically activated surface 109, preferably a wire mesh. The catalytically activated combustion surface preferably comprises one or more layers of wire screen, where the individual wires of the screen may be the same or different in composition, diameter, and orientation. For example, the individual wires or fibres may be arranged non-randomly, such as in a wire screen, or randomly, such as in steel wool. One preferred catalytic surface is a 10-ply layer of 95 percent platinum, 5 percent rhenium alloy screen, whose individual wires are each approximately three mils (0.003 inch, 0.00762 cm) in diameter. Catalytically activated combustion surface 109 reduces the ignition temperature of the hydrogen significantly and mixes the hydrogen with the fluid comprising oxygen passing through forced convection duct 112.

To ensure spontaneous ignition under any conditions, metallic block 108 must be heated to at least 70°C, preferably at least 200°C, by heaters 107 that are preferably embedded in nickel plate 114. Heated nickel plate 114 heats the gas and the mesh to a temperature sufficient so that when the gas exists channel 111 it spreads across a significant portion of catalytically activated combustion surface 109 and a flame is formed. To ensure complete combustion of hydrogen, the flow (designated at 106) of oxygen-containing gas through forced convection duct 112 is preferably maintained at a velocity equal to or greater than 2 meters per second. Minor departures from this flow speed are acceptable, as long as the departures are very temporary. This ensures that the "air" will saturate catalytically activated combustion surface 109 so that it will meet the hydrogen-rich, substantially aerosol-free stream exiting channel 111 as it emerges and combustion will occur in the vicinity of surface 109.

Fluid flow rate for the fluid comprising hydrogen may range from about 1 standard cubic centimetre per minute (sccm) of hydrogen up to flows exceeding 3 standard litres per minute (slpm) hydrogen. Higher flow rates may require a slightly different embodiment having multiple channels 111 and ports to ensure proper distribution of oxygen-containing gas and hydrogen.

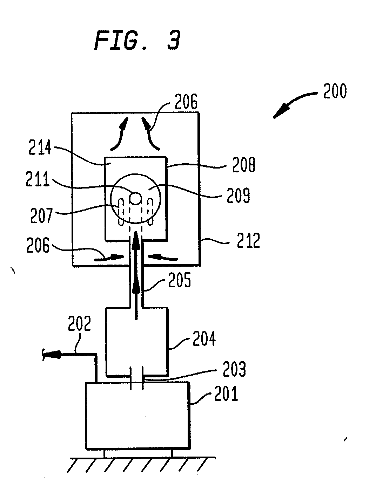

In another embodiment, the aerosol removal unit and the catalytic combustion unit are placed very near, preferably mounted on top of and within the footprint of, the fluorine generator cabinet. This embodiment is illustrated in Figure 3, at 200. Fluorine generator 201 produces a fluorine-rich stream, which exits through conduit 202, and a hydrogen-rich stream that exits through conduit or tube 203, conduit 203 feeding directly into an aerosol removal unit 204 mounted directly on top of fluorine generator 201. A nickel or nickel-lined tube 205 feeds channel 211 in metallic head 208. Head 208 has nickel plate 214, through which channel 211 is drilled or otherwise shaped, allowing reduced aerosol, hydrogen-rich fluid to contact catalytically activated surface 209. Electrical heaters 207 heat the reduced aerosol, hydrogen-rich fluid to the temperatures herein discussed (at least 70°C, preferably at least 200°C), while a fluid comprising oxygen flows (as indicated by arrows 206) through a forced convection duct 212.

The arrangement illustrated in Figure 3 reduces footprint necessary for additional equipment, an important consideration for semiconductor fabrication plants. A separate forced convection duct may be necessary to maintain the proper flow rate within the conditions outlined herein. If the aerosol reduction unit has a soda lime bed, the bed will remove HF for some significant period of time. If it is not changed out, however, HF will pass through the aerosol removal unit but will not affect the operation of the catalytic combustion unit. Therefore, the aerosol removal unit will not require change-out, although it may be desirable for very long term operation of the apparatus of the invention. For a long duration operation, soda lime could absorb enough HF to become soft and start plugging channels 203 and 205. An activated aluminium oxide bed heated to a temperature ranging from about 100°C to about 200°C by a heater, illustrated at 215, would maintain its granular nature longer than soda lime after the HF has fully saturated the bed particles.

One aim of the present invention is to provide a reliable combustion disposal method that does not require a pilot light or ignition source to ensure that the hydrogen ignites, although these may be supplied as redundant back-ups. Whenever hydrogen is present, it will ignite, based on experimentation performed so far using the apparatus and methods of the invention. This will ensure that hydrogen will never be present as long as the forced convection flow, typically an air stream, and the catalytically activated surface are maintained in the conditions described herein. It appears that only minor maintenance may be required for long term operation. The HF vapours may condense forming some corrosion on the catalytically activated combustion surface and other features of the metallic block. The corrosion and HF deposits do not seem to affect the operation of the inventive apparatus, however. The 10-ply platinum/rhenium wire mesh used in testing does not appear to be affected by the presence of HF. The apparatus and methods of the invention reliably remove the potential hazard of pooling hydrogen completely without affecting fluorine generation or requiring other gases such as natural gas to maintain a pilot light or electricity to maintain an ignition spark.

Although the foregoing description is intended to be representative of the invention, it is not intended to in any way limit the scope of the appended claims.

## Claims

1. Apparatus for the disposal of hydrogen in a fluid comprising hydrogen and residual amounts of HF and aerosol electrolyte from a fluorine generator, the apparatus comprising an electrolyte aerosol removal unit comprising an aerosol removal composition therein through which the fluid is adapted to flow; and a catalytic unit comprising a catalytically activated combustion surface, the catalytic unit being positioned inside of a forced convection duct and fluidly connected to the aerosol removal unit by a conduit, the catalytically activated combustion surface being adapted to combust the hydrogen in an oxygen-containing stream flowing through the forced convection duct.

2. Apparatus according to Claim 1, wherein the apparatus is modular.

3. Apparatus according to Claim 1 or Claim 2, wherein the apparatus is portable.

4. Apparatus according to any preceding claim, wherein the aerosol removal component is in bed form.

5. Apparatus according to any preceding claim, wherein the aerosol removal composition comprises a composition selected from the group consisting of soda lime, sodium fluoride, heated activated aluminium oxide, finely divided nickel, or combination thereof.

6. Apparatus according to any preceding claim, wherein the conduit that fluidly connects the aerosol removal unit and the catalytic unit is selected from the group consisting of a nickel tube and a nickel-lined tube.

7. Apparatus according to any preceding claim, comprising means for maintaining the aerosol removal unit at a temperature within the range from about 25°C to about 200°C.

8. Apparatus according to any preceding claim, comprising means for maintaining the catalytic unit at a temperature of at least 70°C, preferably at a temperature of at least 200°C.

9. Apparatus according to any of Claims 1 to 7, comprising means for maintaining the catalytically activated combustion surface at a temperature of at least 70°C, preferably at a temperature of at least 200°C.

10. Apparatus according to any preceding claim, wherein the catalytically activated combustion surface comprises one or more layers of wire screen, wherein individual wires of the wire screen may be the same or different in composition, diameter, and orientation.

11. Apparatus according to Claim 10, wherein the catalytically activated combustion surface is a 10-ply layer of 95 percent platinum, 5 percent rhenium alloy screen.

12. A method for disposal of hydrogen in a fluid comprising hydrogen and residual amounts of HF and aerosol electrolyte from a fluorine generator, the method comprising the steps of flowing the fluid through an electrolyte aerosol removal component comprising an aerosol removal composition, wherein the fluid contacts the aerosol removal composition thereby forming a hydrogen-rich fluid reduced in aerosol, and contacting the hydrogen-rich fluid reduced in aerosol with a catalytically activated combustion surface positioned inside of a forced convection duct while a gas comprising oxygen flows through the forced convection duct, thereby combusting the hydrogen with oxygen in the oxygen-containing stream.

13. Apparatus for generating fluorine, the apparatus comprising a fluorine generator adapted to produce a hydrogen-rich fluid, and apparatus according to any of Claims 1 to 11, wherein the aerosol removal unit is fluidly connected to the fluorine generator and adapted to accept the hydrogen-rich fluid.

14. Apparatus according to Claim 13, wherein the aerosol removal unit and catalytic unit are positioned at a distance from the fluorine generator.

15. Apparatus according to Claim 13, wherein the aerosol removal unit and the catalytic unit are mounted on top of and within the footprint of the fluorine generator.

16. A method for generating fluorine and disposal of by-product hydrogen in a fluid comprising hydrogen, residual amounts of HF and aerosol electrolyte from a fluorine generator, the method comprising the steps of generating a fluorine-rich stream and a hydrogen-rich stream, the hydrogen-rich stream comprising minor amounts of electrolyte and hydrogen fluoride, routing the fluorine-rich stream to a cleanup train to produce a purified fluorine stream, and routing the hydrogen-rich stream to apparatus according to any of Claims 1 to 11, thereby substantially reducing the aerosol content and combusting the hydrogen.
